# EUROPEAN PATENT APPLICATION

(11) **EP 4 787 313 A1**
(43) Date of publication of application: **05.08.2026**
(21) Application number: 24871348.9
(22) Date of filing: 10.05.2024
(51) Int. Cl.: G06T 7/70, H04N 23/60

(54) **POSITION ESTIMATION METHOD, POSITION ESTIMATION DEVICE, AND PROGRAM**

(30) Priority: 29.09.2023 JP 2023169194
(71) Applicant: Panasonic Intellectual Property Management Co., Ltd., Kadoma-shi, Osaka 571-0057 (JP)
(72) Inventor: SAITO, Hiroshi, Kadoma-shi, Osaka 571-0057 (JP)
(74) Representative: Novagraaf International SA
(86) International application number: PCT/JP2024/017349
(87) International publication number: WO 2025/069537

(57) **Abstract**

A position estimation method includes acquiring N (N is an integer of 1 or more) first images imaged by a first camera arranged at a first position, acquiring M (M is an integer of 1 or more) second images imaged by a second camera configured to change an imaging direction by rotating at a second position different from the first position, comparing the N first images to the M second images by using feature points included in the images, determining a first image pair including one first image and one second image among N × M sets of image pairs based on a total number of one or more pairs of feature points matching each other and obtained as a result of the comparison, and estimating the first position and the second position based on the one or more pairs of feature points between the first image pair.

## Description

### TECHNICAL FIELD

The present disclosure relates to a position estimation method, a position estimation device, and a program for calculating positions of a plurality of cameras.

### BACKGROUND ART

PTL 1 discloses a technology of estimating positions and postures of a plurality of imaging devices (that is, cameras) by performing feature point matching on a plurality of images obtained by the plurality of imaging devices.

### Citation List

### Patent Literature

PTL 1: International Publication No. 2020/153264

### SUMMARY OF THE INVENTION

The present disclosure provides a position estimation method and the like capable of accurately estimating positions of a plurality of cameras.

A position estimation method according to an aspect of the present disclosure includes acquiring N (N is an integer of 1 or more) first images imaged by a first camera arranged at a first position, acquiring M (M is an integer of 1 or more) second images imaged by a second camera configured to change an imaging direction by rotating at a second position different from the first position;
comparing the N first images to the M second images by using feature points included in the images, determining a first image pair including one first image and one second image among N × M sets of image pairs based on a total number of one or more pairs of feature points matching each other and obtained as a result of the comparison, and estimating the first position and the second position based on the one or more pairs of feature points between the first image pair.

In addition, a position estimation device according to another aspect of the present disclosure includes an acquisition unit that acquires N (N is an integer of 1 or more) first images imaged by a first camera arranged at a first position and M (M is an integer of 1 or more) second images imaged by a second camera configured to change an imaging direction by rotating at a second position different from the first position, a comparison unit that compares the N first images to the M second images by using feature points included in the images, a determination unit that determines a first image pair including one first image and one second image among N × M sets of image pairs based on a total number of one or more pairs of feature points matching each other and obtained as a result of the comparison, and an estimation unit that estimates the first position and the second position based on the one or more pairs of feature points between the first image pair.

Note that these general or specific aspects may be implemented by a system, an integrated circuit, a computer program, or a non-transitory recording medium such as a computer-readable CD-ROM, or may be implemented by any combination of a method, a system, an apparatus, an integrated circuit, a computer program, and a non-transitory recording medium.

The position estimation method and the like in the present disclosure can accurately estimate the positions of the plurality of cameras.

### BRIEF DESCRIPTION OF THE DRAWINGS

Fig. 1 is a diagram for describing an example of a configuration of an imaging system according to an exemplary embodiment.
Fig. 2 is a block diagram illustrating an example of a configuration of a control device according to the exemplary embodiment.
Fig. 3 is a flowchart illustrating an example of processing of estimating positions of a plurality of cameras according to the exemplary embodiment.
Fig. 4 is a diagram for describing imaging directions of a first camera and a second camera when a first image and a second image are imaged for position estimation according to the exemplary embodiment.
Fig. 5 is a flowchart illustrating an example of processing of estimating positions of a plurality of cameras according to Modification 1.
Fig. 6 is a flowchart illustrating an example of processing of estimating positions of a plurality of cameras according to Modification 2.
Fig. 7 is a flowchart illustrating an example of processing of estimating positions of a plurality of cameras according to Modification 3.
Fig. 8 is a diagram for describing imaging directions of a first camera and a second camera at the time of normal imaging according to Modification 4.
Fig. 9 is a diagram for describing imaging directions of a first camera and a second camera when a first image and a second image are imaged for position estimation according to Modification 4.
Fig. 10 is a diagram illustrating an example of a user interface (UI) that receives a positional relation among a subject, a first camera, and a second camera according to Modification 5.

### DESCRIPTION OF EMBODIMENT

### (Underlying knowledge on the present disclosure)

The inventor of the present invention has found that the following problems arise in the system of the related art described in the field of "BACKGROUND ART".

In the related art such as PTL 1, positions of a plurality of cameras are estimated by using Structure from Motion (SfM). SfM is a technology of selecting any two cameras (hereinafter, a camera pair) from a plurality of cameras, obtaining a relative position (x, y, z) and a rotation angle (ψ, 0, φ) of the camera pair by the principle of triangulation from matching of feature point included in two images (image pair), and estimating alignment that simultaneously satisfies the relative position in all the camera pairs. In the two images of the camera pair, the larger an overlap portion of the images (a portion in which the same subject appears) is obtained by imaging a common subject, the more accurate the estimation can be performed. That is, in a case where the overlap portion is smaller than a predetermined size, feature points are not matched, and it is difficult to accurately estimate the position of the camera pair.

Therefore, in the related art, attempts have been made to increase the overlap and increase the accuracy by using a large number of cameras or imaging a large number of images while moving with one camera.

However, for example, in a case where a specific subject is imaged in a space such as a studio, since it is required to image the subject from different angles, there is a case where the overlap portion cannot be sufficiently increased in an image obtained by imaging the specific subject. In addition, as in the related art, it is possible to use a large number of cameras or to image a large number of images while moving with one camera. However, there is a problem that cost is required for equipment for moving a large number of cameras or one camera.

Therefore, the inventor of the present invention has found a position estimation method and the like that can accurately estimate positions of a plurality of cameras.

A position estimation method according to a first aspect includes acquiring N (N is an integer of 1 or more) first images imaged by a first camera arranged at a first position, acquiring M (M is an integer of 1 or more) second images imaged by a second camera configured to change an imaging direction by rotating at a second position different from the first position, comparing the N first images to the M second images by using feature points included in the images, determining a first image pair including one first image and one second image among N × M sets of image pairs based on a total number of one or more pairs of feature points matching each other and obtained as a result of the comparison, and estimating the first position and the second position based on the one or more pairs of feature points between the first image pair.

Accordingly, the N first images and the M second images are compared by using the feature points included in the images, and the first image pair for estimating the first position and the second position is determined based on the total number of one or more pairs of feature points matching each other. Thus, among the image pairs obtained at the first position and the second position, since an image pair having more pairs of matching feature points can be determined as the first image pair, the first position of the first camera and the second position of the second camera can be accurately estimated.

A position estimation method according to a second aspect is the position estimation method according to the first aspect, in which the first camera and the second camera image a specific imaging range when a subject is imaged, and an image of the subject is not included in the one first image and the one second image.

Accordingly, since the first image and the second image do not include a specific subject to be imaged at the time of normal imaging, there is a possibility that an angle formed by the first imaging direction and the second imaging direction is smaller. Accordingly, an area of a subject included in common in one first image and one second image can be increased, and the image pair having more pairs of matching feature points can be determined with less processing load.

A position estimation method according to a third aspect is the position estimation method according to the first aspect, in which the first camera and the second camera image a specific imaging range when a subject is imaged, and an intersection of a first imaging direction in which the one first image is imaged and a second imaging direction in which the one second image is imaged is included in a range excluding the specific imaging range.

Accordingly, since the intersection of the first imaging direction and the second imaging direction is included in the range excluding the specific imaging range, there is a possibility that the angle formed by the first imaging direction and the second imaging direction is smaller. Accordingly, an area of a subject included in common in one first image and one second image can be increased, and the image pair having more pairs of matching feature points can be determined with less processing load.

A position estimation method according to a fourth aspect is the position estimation method according to the first aspect, in which the first camera and the second camera image a specific imaging range when a subject is imaged, the M second images include two or more second images obtained by imaging in a plurality of imaging directions different from each other, and in the determination, the first image pair is determined from among one or more image pairs in which an intersection of a first imaging direction in which a first image is imaged and a second imaging direction in which a second image is imaged is included in a range excluding the specific imaging range, among the N × M sets of image pairs.

Accordingly, one or more image pairs for which the first image pair is to be determined can be narrowed down to one or more image pairs in which the intersection of the first imaging direction and the second imaging direction is included in the range excluding the specific imaging range. In one or more image pairs in which the intersection of the first imaging direction and the second imaging direction is included in the range excluding the specific imaging range, there is a high possibility that the angle formed by the first imaging direction and the second imaging direction is smaller. Accordingly, an area of a subject included in common in one first image and one second image can be increased, and the image pair having more pairs of matching feature points can be determined with less processing load.

A position estimation method according to a fifth aspect is the position estimation method according to any one of the first to fourth aspects, in which the M second images include two or more second images obtained by imaging in a plurality of imaging directions different from each other, and a total number of one or more pairs of feature points between the first image pair is more than a total number of one or more pairs of feature points between one or more second image pairs excluding the first image pair, among the N × M sets of image pairs.

Thus, among the image pairs obtained at the first position and the second position, since the image pair having the number of pairs of matching feature points more than other image pairs can be determined as the first image pair, the first position of the first camera and the second position of the second camera can be accurately estimated.

A position estimation method according to a sixth aspect is the position estimation method according to any one of the first to fourth aspects, in which the M second images include two or more second images obtained by imaging in a plurality of imaging directions different from each other, the comparison is performed for each of the N × M sets of image pairs, and in the determination, total numbers of one or more pairs of feature points obtained in the N × M sets of image pairs are compared, and an image pair having a largest total number is determined as the first image pair.

Thus, among the image pairs obtained at the first position and the second position, since the image pair having the largest number of pairs of matching feature points can be determined as the first image pair, the first position of the first camera and the second position of the second camera can be accurately estimated.

A position estimation method according to a seventh aspect is the position estimation method according to any one of the first to fourth aspects, in which a total number of one or more pairs of feature points between the first image pair is more than a threshold.

Thus, among the image pairs obtained at the first position and the second position, since the image pair having the number of pairs of matching feature points more than the threshold can be determined as the first image pair, the first position of the first camera and the second position of the second camera can be accurately estimated. In addition, in a case where the image pair exceeding the threshold is found, since the subsequent processing can be ended, the processing load can be reduced.

A position estimation method according to an eighth aspect is the position estimation method according to the seventh aspect, in which the comparison is performed sequentially for the N × M sets of image pairs, and in the determination, an image pair having a number of pairs of feature points more than the threshold is determined as the first image pair.

Accordingly, among the image pairs obtained at the first position and the second position, since the image pair having the number of pairs of matching feature points more than the threshold can be determined as the first image pair, the first position of the first camera and the second position of the second camera can be accurately estimated. In addition, in a case where the image pair exceeding the threshold is found, since the subsequent processing can be ended, the processing load can be reduced.

A position estimation method according to a ninth aspect is the position estimation method according to the seventh aspect or the eighth aspect, in which the first camera is configured to change the imaging direction by rotating at the first position, the N first images include two or more first images obtained by imaging in a plurality of imaging directions different from each other, and include an image obtained by imaging a predetermined direction by the first camera, and the M second images include two or more second images obtained by imaging in a plurality of imaging directions different from each other, and include an image obtained by imaging the predetermined direction by the second camera.

Thus, for example, an image pair of a first image and a second image obtained by imaging a predetermined direction can be preferentially processed, and there is a possibility that the image pair having more pairs of matching feature points can be determined as the first image pair at an early stage of the processing. As a result, it is possible to increase a possibility that the first image pair can be determined without performing processing on all the M × N sets of image pairs, and it is possible to reduce a processing load.

A position estimation method according to a tenth aspect is the position estimation method according to the ninth aspect, in which the first camera and the second camera are arranged in a building, and the predetermined direction is a direction in which a ceiling of the building is present.

Thus, an image pair of a first image and a second image obtained by imaging a predetermined direction in which there is a high possibility that the common subject is imaged can be preferentially processed, and there is a possibility that the image pair having more pairs of matching feature points can be determined as the first image pair at an early stage of the processing.

A position estimation method according to an eleventh aspect is the position estimation method according to any one of the second aspect to the fourth aspect, in which an input indicating a positional relation among the first position, the second position, and a third position within the specific imaging range is received, the N first images include an image obtained by imaging a direction in which the first camera has a direction component for the second position, and the M second images include an image obtained by imaging a direction in which the second camera has a direction component for the first position.

Thus, the image pair of the first image and the second image obtained by imaging the direction in which there is a high possibility that the common subject is imaged can be preferentially processed, and there is a possibility that the image pair having more pairs of matching feature points can be determined as the first image pair at an early stage of the processing.

A position estimation device according to a twelfth aspect includes an acquisition unit that acquires N (N is an integer of 1 or more) first images imaged by a first camera arranged at a first position and M (M is an integer of 1 or more) second images imaged by a second camera configured to change an imaging direction by rotating at a second position different from the first position, a comparison unit that compares the N first images to the M second images by using feature points included in the images, a determination unit that determines a first image pair including one first image and one second image among N × M sets of image pairs based on a total number of one or more pairs of feature points matching each other and obtained as a result of the comparison, and an estimation unit that estimates the first position and the second position based on the one or more pairs of feature points between the first image pair.

Accordingly, the N first images and the M second images are compared by using the feature points included in the images, and the first image pair for estimating the first position and the second position is determined based on the total number of one or more pairs of feature points matching each other. Thus, among the image pairs obtained at the first position and the second position, since an image pair having more pairs of matching feature points can be determined as the first image pair, the first position of the first camera and the second position of the second camera can be accurately estimated.

A program according to a thirteenth aspect is a program for causing a computer to execute the position estimation method according to any one of the first aspect to the eleventh aspect.

Note that these general or specific aspects may be implemented by a system, an integrated circuit, a computer program, or a non-transitory recording medium such as a computer-readable CD-ROM, or may be implemented by any combination of a method, a system, an apparatus, an integrated circuit, a computer program, and a non-transitory recording medium.

Some exemplary embodiments will now be described in detail with reference to the drawings, as appropriate. However, unnecessary detailed description may be omitted. For example, detailed descriptions of already well-known matters and duplicated descriptions of substantially the same configuration may be omitted. This is to avoid unnecessary redundancy in the following description and to facilitate understanding of those skilled in the art.

Note that the accompanying drawings and the following description are provided for those skilled in the art to fully understand the present disclosure, and are not intended to limit the subject matter recited in the appended claims.

### (Exemplary embodiment)

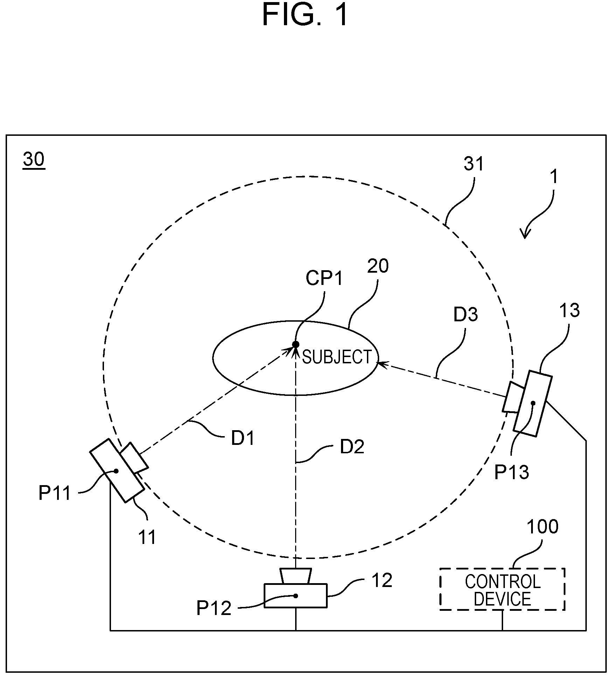

An exemplary embodiment will be described below with reference to Figs. 1 to 10.

### [1. Configuration]

Fig. 1 is a diagram for describing an example of a configuration of an imaging system according to the exemplary embodiment.

In imaging system 1, specific subject 20 positioned within specific imaging range 31 in space 30 is imaged by a plurality of cameras 11 to 13 arranged at different positions in space 30. Among the plurality of cameras 11 to 13, camera 11 is arranged at first position P11, camera 12 is arranged at second position P12, and camera 13 is arranged at third position P13. Since the plurality of cameras 11 to 13 images common subject 20 from different positions, it is possible to obtain images obtained by imaging specific subject 20 from a plurality of different imaging directions D1 to D3. That is, first camera 11 images subject 20 in imaging direction D1, second camera 12 images subject 20 in imaging direction D2, and third camera 13 images subject 20 in imaging direction D3. Note that the images obtained by the plurality of cameras 11 to 13 may be still images or moving images.

Each of first camera 11, second camera 12, and third camera 13 is a PTZ camera capable of panning, tilting, and zooming. That is, first camera 11 can change imaging direction D1 by rotating in rotation directions of two axes different from each other at first position P11. Similarly, second camera 12 can change imaging direction D2 by rotating in rotation directions of two axes different from each other at second position P12. Similarly, third camera 13 can change imaging direction D3 by rotating in rotation directions of two axes different from each other at third position P13. As described above, each of first camera 11, second camera 12, and third camera 13 has a rotation mechanism that changes the imaging direction by rotating in the rotation directions of the two axes.

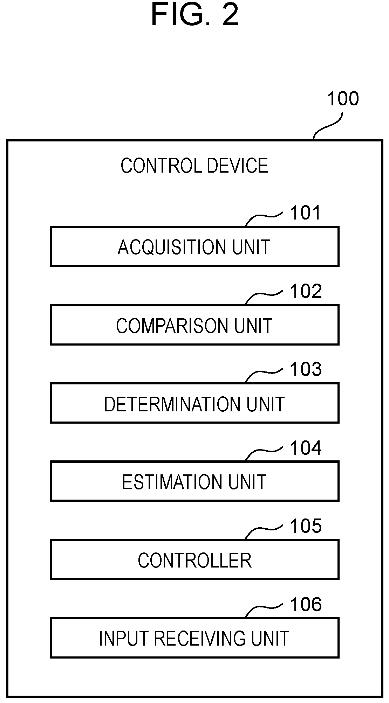

Control device 100 controls operations of the plurality of cameras 11 to 13. Control device 100 acquires a plurality of images obtained by imaging by the plurality of cameras 11 to 13 from the plurality of cameras 11 to 13, and estimates relative positions and postures of the plurality of cameras 11 to 13 by using the plurality of acquired images. Control device 100 is an example of a position estimation device. A detailed configuration of control device 100 will be described with reference to Fig. 2.

Fig. 2 is a block diagram illustrating an example of a configuration of the control device according to the exemplary embodiment.

Control device 100 includes acquisition unit 101, comparison unit 102, determination unit 103, and estimation unit 104. Control device 100 may further include controller 105 and an input receiving unit 106.

Acquisition unit 101 acquires an N first image imaged in imaging direction D1 by first camera 11. N is 1 in the present exemplary embodiment. Acquisition unit 101 acquires M second images imaged in different imaging directions D2 by second camera 12. M is an integer of 2 or more in the present exemplary embodiment. The M second images are, for example, images imaged by second camera 12 positioned at second position P12 in M imaging directions D2 determined by a combination of a direction divided at predetermined angular intervals (for example, 10 degrees, 15 degrees, and the like) in a pan direction and a direction divided at predetermined angular intervals in a tilt direction.

Comparison unit 102 compares the N first images to the M second images by using feature points included in the images. Specifically, comparison unit 102 specifies one or more feature points in each of the N first images. Comparison unit 102 specifies one or more feature points in each of the M second images. Then, comparison unit 102 compares N × M sets of image pairs obtained by combining each of the N first images and each of the M second images, and determines whether or not one or more feature points of the first image and one or more feature points of the second image included in the image pair match each other. As a result, comparison unit 102 specifies one or more pairs of feature points matching each other (hereinafter, referred to as feature point pairs). As described above, comparison unit 102 specifies the feature point pair in which the feature points match each other in each of the N × M sets of image pairs by comparing the N first images with the M second images.

Determination unit 103 determines a first image pair including one first image and one second image among the N × M sets of image pairs based on the total number of one or more feature point pairs matching each other and obtained as a result of the comparison by comparison unit 102. Specifically, determination unit 103 compares total numbers of one or more pairs of feature points obtained in the N × M sets of image pairs, and determines, as the first image pair, an image pair having a largest total number. That is, the total number of one or more pairs of feature points between the first image pair is more than the total number of one or more pairs of feature points between the one or more second image pairs. The one or more second image pairs are image pairs excluding the first image pair among the N × M sets of image pairs.

Estimation unit 104 estimates first position P11 of first camera 11 and second position P12 of second camera 12 based on the one or more pairs of feature points between the first image pair. For example, SfM is used for the estimation of first position P11 and second position P12 by estimation unit 104.

Note that, in the above description, the processing of estimating, by control device 100, first position P11 of first camera 11 and second position P12 of second camera 12 has been described. However, similar processing can be performed in two cameras of another combination of the plurality of cameras 11 to 13.

Controller 105 instructs the plurality of cameras 11 to 13 to image images. Specifically, controller 105 may instruct second camera 12 to image M second images in each of M imaging directions D2 by second camera 12. Controller 105 may instruct the plurality of cameras 11 to 13 to image images in accordance with an input received by input receiving unit 106 to be described later. For example, controller 105 may instruct the camera designated by a user to perform imaging in the imaging direction designated by the user.

Input receiving unit 106 receives an input from the user. The input from the user may be an input for instructing the plurality of cameras 11 to 13 to perform imaging, or may be an input for instructing a specific camera to perform imaging. In the input for instructing imaging, an imaging direction, an imaging timing, image quality of an image to be imaged, and the like may be designated. The image quality includes, for example, a resolution and a frame rate in the case of the moving image.

### [2. Operation]

An operation of estimating the positions of the plurality of cameras 11 to 13 by control device 100 of imaging system 1 having the above configuration will be described.

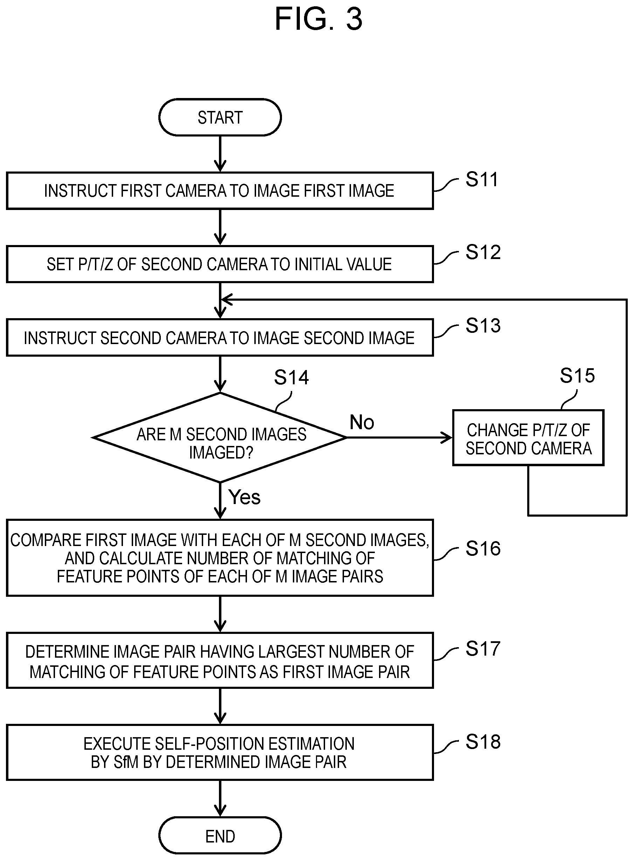

Fig. 3 is a flowchart illustrating an example of processing of estimating positions of a plurality of cameras according to the exemplary embodiment.

Control device 100 instructs first camera 11 to image the first image (S11). As a result, control device 100 acquires the first image from first camera 11.

Next, control device 100 sets the pan, tilt, and zoom (denoted as P/T/Z in Fig. 3) of second camera 12 to initial values (S12). That is, control device 100 transmits, to second camera 12, a setting value for imaging in a predetermined imaging direction at a predetermined zoom ratio by setting the imaging setting of second camera 12 to an initial value.

Next, control device 100 instructs second camera 12 to image the second image (S13). Control device 100 instructs second camera 12 to perform imaging with the set setting values of the pan, tilt, and zoom. As a result, control device 100 acquires the second image from second camera 12.

Next, control device 100 determines whether or not M second images are imaged (S14).

In a case where control device 100 determines that M second images are imaged (Yes in S14), the processing proceeds to step S16, and in a case where the control device determines that M second images are not imaged (No in S14), the processing proceeds to step S15.

In step S15, control device 100 changes at least the setting value of the pan or tilt of the pan, tilt, and zoom of second camera 12, and transmits the changed setting value to second camera 12 (S15). As a result, second camera 12 rotates to change the imaging direction. Upon completion of step S15, the processing proceeds to step S13. Thus, second camera 12 performs imaging in the changed imaging direction, and control device 100 acquires the second image in the changed imaging direction from second camera 12. Note that the setting value of the zoom may be changed.

Since step S15 and step S13 are repeated until Yes is determined in step S14, the determination of Yes in step S14 means that M second images imaged in different M imaging directions are acquired by control device 100. Thus, at a stage of executing step S16 performed in a case where Yes is determined in step S14, control device 100 acquires one first image and M second images. Control device 100 compares one first image with each of the M second images, performs the matching of the feature points of each of the M sets of image pairs, and calculates the total number of feature point pairs (the number of matching feature points) (S16).

Next, control device 100 determines, as the first image pair, an image pair having a largest number of matching feature points, among the M sets of image pairs (S17).

Next, control device 100 estimates first position P11 of first camera 11 and second position P12 of second camera 12 based on the one or more pairs of feature points between the determined first image pair (S18).

Note that steps S12 to S15 may not be performed after step S11, and step S11 and steps S12 to S15 may be performed in parallel.

### [3. Effects and the like]

In the position estimation method according to the present exemplary embodiment, control device 100 acquires N (N is an integer of 1 or more) first images imaged by first camera 11 arranged at first position P11 (S11). Control device 100 acquires M (M is an integer of 1 or more) second images imaged by second camera 12 capable of changing the imaging direction by rotating at second position P12 different from first position P11 (S13). Control device 100 compares the N first images to the M second images by using the feature points included in the images, and determines the first image pair including one first image and one second image among the N × M sets of image pairs based on the total numbers of one or more pairs of feature points matching each other and obtained as a result of the comparison (S17). Control device 100 estimates first position P11 and second position P12 based on the one or more pairs of feature points between the first image pair (S18).

Accordingly, the N first images and the M second images are compared by using the feature points included in the images, and the first image pair for estimating first position P11 and second position P12 is determined based on the total numbers of one or more pairs of feature points matching each other. Thus, among the image pairs obtained at first position P11 and second position P12, since an image pair having more pairs of matching feature points can be determined as the first image pair, first position P11 of first camera 11 and second position P12 of second camera 12 can be accurately estimated.

In addition, in the position estimation method according to the present exemplary embodiment, the M second images include two or more second images obtained by imaging in the plurality of imaging directions different from each other. The total number of one or more pairs of feature points between the first image pair is more than the total number of one or more pairs of feature points between the one or more second image pairs.

Thus, among the image pairs obtained at first position P11 and second position P12, since an image pair having a number of pairs of matching feature points more than other image pairs can be determined as the first image pair, first position P11 of first camera 11 and second position P12 of second camera 12 can be accurately estimated.

In addition, in the position estimation method according to the present exemplary embodiment, the M second images include two or more second images obtained by imaging in the plurality of imaging directions different from each other. The comparison is performed for each of the N × M sets of image pairs. In the determination, the total numbers of one or more pairs of feature points obtained in the N × M sets of image pairs are compared, and the image pair having the largest total number is determined as the first image pair.

Thus, among the image pairs obtained at first position P11 and second position P12, since the image pair having the largest number of pairs of matching feature point can be determined as the first image pair, first position P11 of first camera 11 and second position P12 of second camera 12 can be accurately estimated.

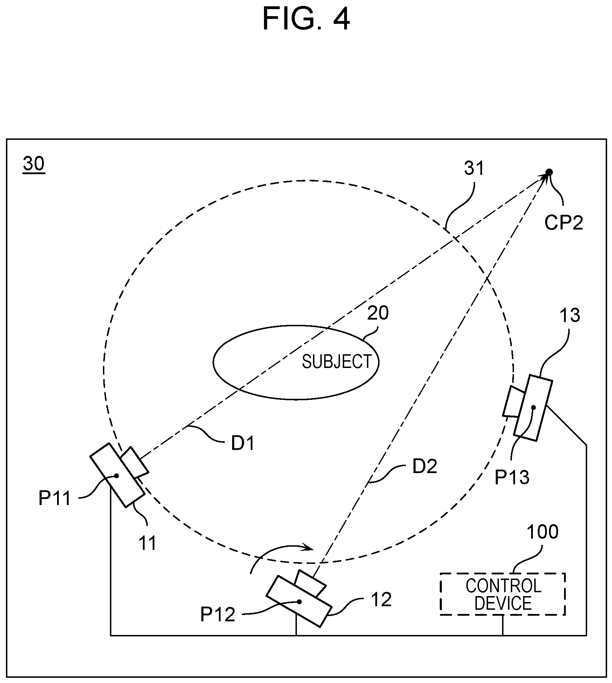

Fig. 4 is a diagram for describing the imaging directions of the first camera and the second camera when the first image and the second image are imaged for position estimation according to the exemplary embodiment. Description will be made in comparison with Fig. 1.

In Fig. 1, since first camera 11 and second camera 12 perform imaging in the imaging direction in which subject 20 is imaged, intersection CP1 of imaging direction D1 and imaging direction D2 is present in specific imaging range 31 in which subject 20 is present. On the other hand, in Fig. 4, in order to increase the total number of feature point pairs (the number of matching feature points) obtained by the feature point matching, first camera 11 and second camera 12 perform imaging in imaging direction D1 and imaging direction D2 in which a region of the image common to the imaged first image and second image is increased. Accordingly, an angle formed by imaging direction D1 and imaging direction D2 at the time of position estimation is smaller than an angle formed by imaging direction D1 and imaging direction D2 at the time of imaging subject 20. Thus, intersection CP2 of imaging direction D1 and imaging direction D2 at the time of position estimation is present outside specific imaging range 31. That is, intersection CP2 of imaging direction D1 in which the first image of the first image pair is imaged and imaging direction D2 in which the second image is imaged is included in a range excluding specific imaging range 31. Note that, when the angle formed by imaging direction D1 and imaging direction D2 is less than or equal to a predetermined angle (for example, 10 degrees), since a ratio of a region to be imaged in common can be increased, the number of matching feature points can be sufficiently increased.

### [4. Modifications]

### [4-1. Modification 1]

In the above exemplary embodiment, first position P11 of first camera 11 and second position P12 of second camera 12 are estimated by using one first image obtained by fixing imaging direction D1 of first camera 11 and M second images obtained by changing imaging direction D2 of second camera 12. In Modification 1, first position P11 of first camera 11 and second position P12 of second camera 12 are estimated by using N (an integer of 2 or more in Modification 1) first images and M (an integer of 2 or more in Modification 1) second images obtained by changing the imaging directions of both first camera 11 and second camera 12.

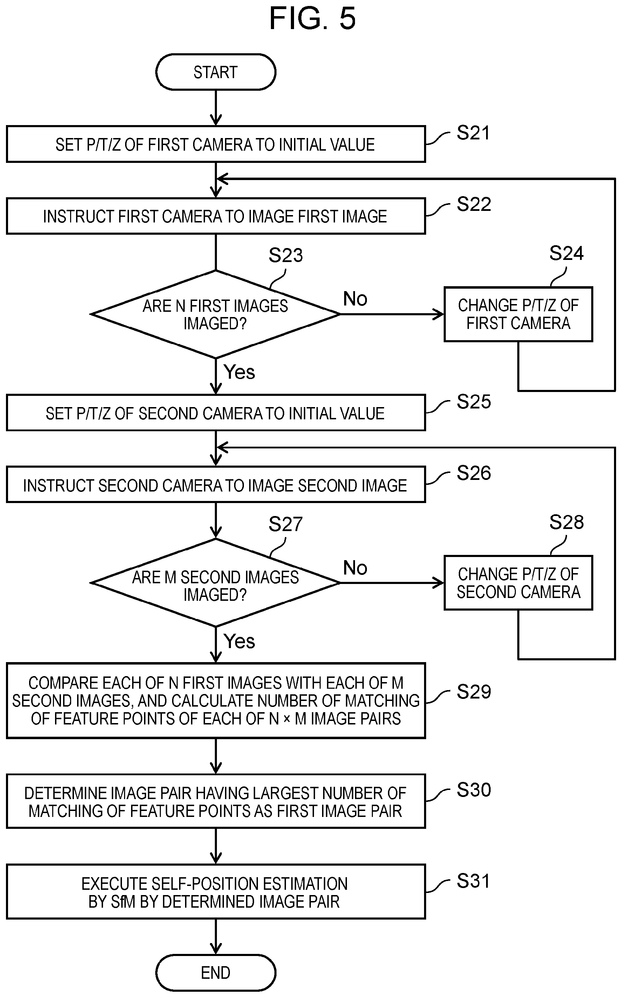

Fig. 5 is a flowchart illustrating an example of processing of estimating positions of a plurality of cameras according to Modification 1.

Control device 100 sets the pan, tilt, and zoom (denoted as P/T/Z in Fig. 5) of first camera 11 to initial values (S21). That is, control device 100 transmits, to first camera 11, a setting value for imaging in a predetermined imaging direction at a predetermined zoom ratio by setting the imaging setting of first camera 11 to an initial value.

Next, control device 100 instructs first camera 11 to image the first image (S22). Control device 100 instructs first camera 11 to perform imaging with the set setting values of the pan, tilt, and zoom. As a result, control device 100 acquires the first image from first camera 11.

Next, control device 100 determines whether or not N first images are imaged (S23).

In a case where control device 100 determines that N first images are imaged (Yes in S23), the processing proceeds to step S25, and in a case where the control device determines that M second images are not imaged (No in S23), the processing proceeds to step S24.

In step S24, control device 100 changes at least the setting value of the pan or tilt of the pan, tilt, and zoom of first camera 11, and transmits the changed setting value to first camera 11 (S24). As a result, first camera 11 rotates to change the imaging direction. Upon completion of step S24, the processing proceeds to step S22. Thus, first camera 11 performs imaging in the changed imaging direction, and control device 100 acquires the first image in the changed imaging direction from first camera 11. Note that the setting value of the zoom may be changed.

Since step S24 and step S22 are repeated until Yes is determined in step S23, the determination of Yes in step S23 means that N first images imaged in different N imaging directions are acquired by control device 100.

Next, control device 100 sets the pan, tilt, and zoom (denoted as P/T/Z in Fig. 5) of second camera 12 to initial values (S25). That is, control device 100 transmits, to second camera 12, a setting value for imaging in a predetermined imaging direction at a predetermined zoom ratio by setting the imaging setting of second camera 12 to an initial value.

Next, control device 100 instructs second camera 12 to image the second image (S26). Control device 100 instructs second camera 12 to perform imaging with the set setting values of the pan, tilt, and zoom. As a result, control device 100 acquires the second image from second camera 12.

Next, control device 100 determines whether or not M second images are imaged (S27).

In a case where control device 100 determines that M second images are imaged (Yes in S27), the processing proceeds to step S29, and in a case where the control device determines that M second images are not imaged (No in S27), the processing proceeds to step S28.

In step S28, control device 100 changes at least the setting value of the pan or tilt of the pan, tilt, and zoom of second camera 12, and transmits the changed setting value to second camera 12 (S28). As a result, second camera 12 rotates to change the imaging direction. Upon completion of step S28, the processing proceeds to step S26. Thus, second camera 12 performs imaging in the changed imaging direction, and control device 100 acquires the second image in the changed imaging direction from second camera 12. Note that the setting value of the zoom may be changed.

Since steps S28 and S26 are repeated until Yes is determined in step S27, the determination of Yes in step S27 means that M second images imaged in different M imaging directions are acquired by control device 100.

Since step S29 is performed in a case where Yes is determined in each of step S23 and step S27, control device 100 acquires N first images and M second images in step S29. Control device 100 compares each of the N first images with each of the M second images, and calculates the total number of feature point pairs (the number of matching feature points) of each of the N × M sets of image pairs (S29).

Next, control device 100 determines, as the first image pair, an image pair having a largest number of matching feature points, among the N × M sets of image pairs (S30).

Next, control device 100 estimates first position P11 of first camera 11 and second position P12 of second camera 12 based on the one or more pairs of feature points between the determined first image pair (S31).

Note that, although the example in which steps S25 to S28 are performed after steps S21 to S24 has been described, steps S21 to S24 and steps S25 to S28 may be performed in parallel without being limited thereto.

### [4-2. Modification 2]

In the above-described exemplary embodiment and Modification 1, control device 100 acquires the N first images from first camera 11, acquires the M second images from second camera 12, and calculates the total numbers of pairs of feature points for N × M sets of image pairs each including the combination of each of the N first images and each of the M second images. However, the present disclosure is not limited thereto. That is, the control device 100 may not calculate the total number of pairs of feature points for all pairs of N × M sets of image pairs, and may calculate the total number of pairs of feature points for only some pairs. Since a configuration of control device 100 of Modification 2 is the same as that of control device 100 of the exemplary embodiment and the processing performed by comparison unit 102 and determination unit 103 is different, different processing will be described.

Comparison unit 102 sequentially compares the N × M sets of image pairs. Specifically, comparison unit 102 sequentially determines whether or not one or more feature points of the first image and one or more feature points of the second image included in the image pair match each other, for the N × M sets of image pairs. As a result, comparison unit 102 specifies one or more feature point pairs matching each other between the image pair as a processing target.

Determination unit 103 determines whether or not the number of specified one or more feature point pairs is more than a threshold for the image pair as a processing target, and determines, as the first image pair, the image pair as a processing target in a case where it is determined that the number of specified one or more feature point pairs is more than the threshold. That is, determination unit 103 determines, as the first image pair, an image pair having a number of pairs of feature points more than the threshold. That is, the total number of one or more pairs of feature points between the first image pair is more than the threshold.

In a case where determination unit 103 can specify the image pair having the number of feature point pairs more than the threshold, comparison unit 102 and determination unit 103 may not perform processing on an unprocessed image pairs in the N × M sets of image pairs.

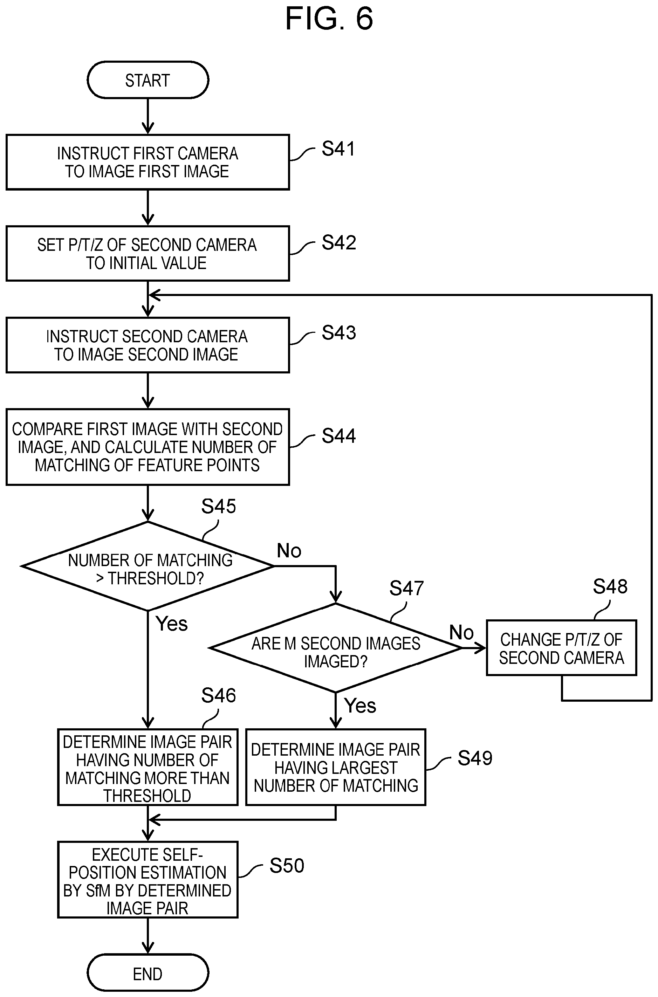

Fig. 6 is a flowchart illustrating an example of processing of estimating positions of a plurality of cameras according to Modification 2.

Control device 100 instructs first camera 11 to image the first image (S41). As a result, control device 100 acquires the first image from first camera 11.

Next, control device 100 sets the pan, tilt, and zoom (denoted as P/T/Z in Fig. 6) of second camera 12 to initial values (S42). That is, control device 100 transmits, to second camera 12, a setting value for imaging in a predetermined imaging direction at a predetermined zoom ratio by setting the imaging setting of second camera 12 to an initial value.

Next, control device 100 instructs second camera 12 to image the second image (S43). Control device 100 instructs second camera 12 to perform imaging with the set setting values of the pan, tilt, and zoom. As a result, control device 100 acquires the second image from second camera 12.

Next, control device 100 compares the first image with the second image obtained in immediately preceding step S43, performs the matching of the feature points, and calculates the total number of feature point pairs (the number of matching feature points) (S44).

Next, control device 100 determines whether or not the number of matching feature points is more than a threshold (S45).

In a case where it is determined that the number of matching feature points is more than the threshold (Yes in S45), control device 100 determines, as the first image pair, an image pair having a number of matching feature points more than the threshold (S46).

In a case where it is determined that the number of matching feature points is less than or equal to the threshold (No in S45), control device 100 determines whether or not M second images are imaged (S47).

In a case where control device 100 determines that M second images are imaged (Yes in S47), the processing proceeds to step S49, and in a case where the control device determines that M second images are not imaged (No in S47), the processing proceeds to step S48.

In step S48, control device 100 changes at least the setting value of the pan or tilt of the pan, tilt, and zoom of second camera 12, and transmits the changed setting value to second camera 12 (S48). As a result, second camera 12 rotates to change the imaging direction. Upon completion of step S48, the processing proceeds to step S43. Thus, second camera 12 performs imaging in the changed imaging direction, and control device 100 acquires the second image in the changed imaging direction from second camera 12. Then, control device 100 executes the processing of step S44 and step S45 on a newly acquired second image. Note that the setting value of the zoom may be changed.

In a case where No is determined in step S45, since step S48 and steps S43 to S45 are repeated until YES is determined in step S47, the determination of Yes in step S47 means that there is no image pair having the number of matching feature points more than the threshold and M second images imaged in different M imaging directions are acquired by control device 100. Thus, control device 100 compares one first image with each of the M second images, performs matching of feature points of each of the M sets of image pairs, calculates the total number of feature point pairs (the number of matching feature points), and determines, as the first image pair, an image pair having a largest number of matching feature points, among the M sets of image pairs (S49).

Next, control device 100 estimates first position P11 of first camera 11 and second position P12 of second camera 12 based on the one or more pairs of feature points between the determined first image pair (S50).

In addition, in the position estimation method according to Modification 2, the comparison between the N first images to the M second images is sequentially performed for the N × M sets of image pairs. In the determination of the first image pair used for the position estimation, an image pair having a number of pairs of feature points more than the threshold is determined as the first image pair. That is, the total number of one or more pairs of feature points between the first image pair may be more than the threshold.

Thus, among the image pairs obtained at first position P11 and second position P12, since the image pair having the number of pairs of matching feature points more than the threshold can be determined as the first image pair used for the position estimation, first position P11 of first camera 11 and second position P12 of second camera 12 can be accurately estimated. In addition, in a case where the image pair having the number of feature point pairs more than the threshold is found, since the subsequent processing can be ended, a processing load can be reduced.

### [4-3. Modification 3]

In Modification 2, first position P11 of first camera 11 and second position P12 of second camera 12 are estimated by using one first image obtained by fixing imaging direction D1 of first camera 11 and M second images obtained by changing imaging direction D2 of second camera 12. In Modification 3, first position P11 of first camera 11 and second position P12 of second camera 12 are estimated by using N (an integer of 2 or more in Modification 1) first images and M (an integer of 2 or more in Modification 1) second images obtained by changing the imaging directions of both first camera 11 and second camera 12.

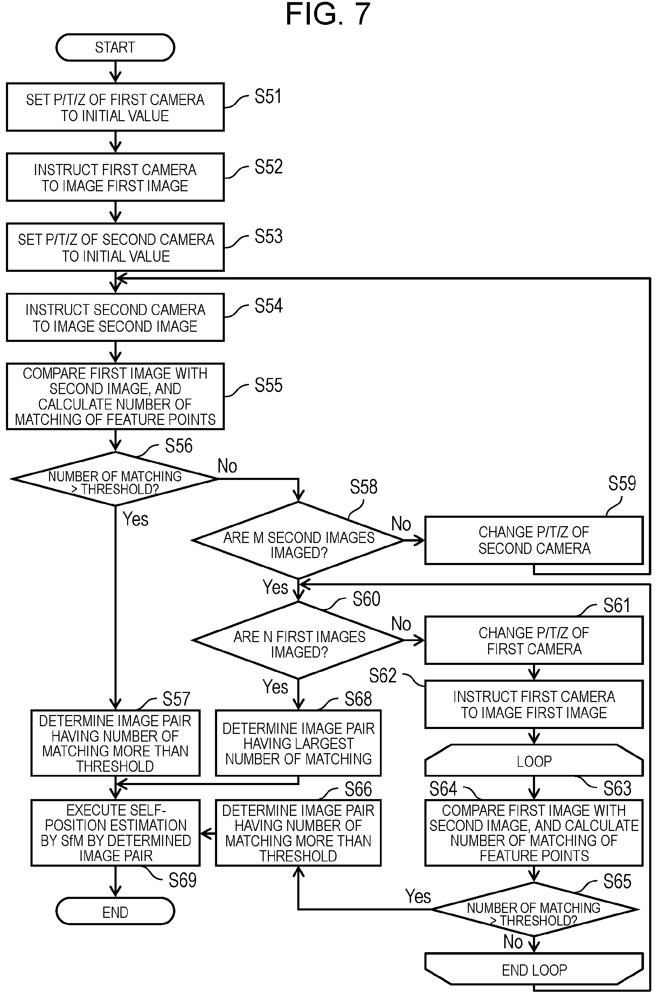

Fig. 7 is a flowchart illustrating an example of processing of estimating positions of a plurality of cameras according to Modification 3.

Control device 100 sets the pan, tilt, and zoom (denoted as P/T/Z in Fig. 7) of first camera 11 to initial values (S51). That is, control device 100 transmits, to first camera 11, a setting value for imaging in a predetermined imaging direction at a predetermined zoom ratio by setting the imaging setting of first camera 11 to an initial value.

Next, control device 100 instructs first camera 11 to image the first image (S52). Control device 100 instructs first camera 11 to perform imaging with the set setting values of the pan, tilt, and zoom. As a result, control device 100 acquires the first image from first camera 11.

Next, control device 100 sets the pan, tilt, and zoom (denoted as P/T/Z in Fig. 7) of second camera 12 to initial values (S53). That is, control device 100 transmits, to second camera 12, a setting value for imaging in a predetermined imaging direction at a predetermined zoom ratio by setting the imaging setting of second camera 12 to an initial value.

Next, control device 100 instructs second camera 12 to image the second image (S54). Control device 100 instructs second camera 12 to perform imaging with the set setting values of the pan, tilt, and zoom. As a result, control device 100 acquires the second image from second camera 12.

Next, control device 100 compares the first image with the second image obtained in immediately preceding step S54, performs the matching of the feature points, and calculates the total number of feature point pairs (the number of matching feature points) (S55).

Next, control device 100 determines whether or not the number of matching feature points is more than a threshold (S56).

In a case where it is determined that the number of matching feature points is more than the threshold (Yes in S56), control device 100 determines, as the first image pair, an image pair having a number of matching feature point pairs more than the threshold (S57).

In a case where it is determined that the number of matching feature points is less than or equal to the threshold (No in S56), control device 100 determines whether or not M second images are imaged (S58).

In a case where control device 100 determines that M second images are imaged (Yes in S58), the processing proceeds to step S60, and in a case where the control device determines that M second images are not imaged (No in S58), the processing proceeds to step S59.

In step S59, control device 100 changes at least the setting value of the pan or tilt of the pan, tilt, and zoom of second camera 12, and transmits the changed setting value to second camera 12 (S59). As a result, second camera 12 rotates to change the imaging direction. Upon completion of step S59, the processing proceeds to step S54. Thus, second camera 12 performs imaging in the changed imaging direction, and control device 100 acquires the second image in the changed imaging direction from second camera 12. Then, control device 100 executes the processing of step S55 and step S56 on a newly acquired second image. Note that the setting value of the zoom may be changed.

In step S60, it is determined whether or not N first images are imaged (S60).

In a case where control device 100 determines that N first images are imaged (Yes in S60), the processing proceeds to step S68, and in a case where control device 100 determines that N first images are not imaged (No in S60), the processing proceeds to step S61.

In step S61, control device 100 changes at least the setting value of the pan or tilt of the pan, tilt, and zoom of first camera 11, and transmits the changed setting value to first camera 11 (S61). As a result, first camera 11 rotates to change the imaging direction. Note that the setting value of the zoom may be changed.

Next, control device 100 instructs first camera 11 to image the first image (S62). Thus, first camera 11 performs imaging in the changed imaging direction, and control device 100 acquires the first image in the changed imaging direction from first camera 11.

Control device 100 executes a loop for each of the M second images (S63). In the loop, steps S64 and S65 are executed.

Control device 100 compares the newly acquired first image with the second image as a processing target, and calculates the number of matching feature points (S64).

Next, control device 100 determines whether or not the number of matching feature points is more than a threshold (S65).

In a case where it is determined that the number of matching feature points is more than the threshold (Yes in S65), control device 100 determines, as the first image pair, an image pair having a number of matching feature point pairs more than the threshold (S66).

In a case where it is determined that the number of matching feature points is less than or equal to the threshold (No in S65), control device 100 repeats steps S64 and S56 with a next second image as a processing target. When the loop is ended for the M second images, the processing proceeds to step S60.

Since steps S61 to S65 are repeated until Yes is determined in step S60, the determination of Yes in step S60 means that there is no image pair having the number of matching feature points more than the threshold and N first images imaged in different N imaging directions and M second images imaged in different M imaging directions are acquired by control device 100. Thus, control device 100 compares each of the N first images with each of the M second images, performs matching of feature points of each of the N × M sets of image pairs, calculates the total number of feature point pairs (the number of matching feature points), and determines, as the first image pair, an image pair having a largest number of matching feature points, among the N × M sets of image pairs (S68).

Next, control device 100 estimates first position P11 of first camera 11 and second position P12 of second camera 12 based on the one or more pairs of feature points between the determined first image pair (S69).

### [4-4. Modification 4]

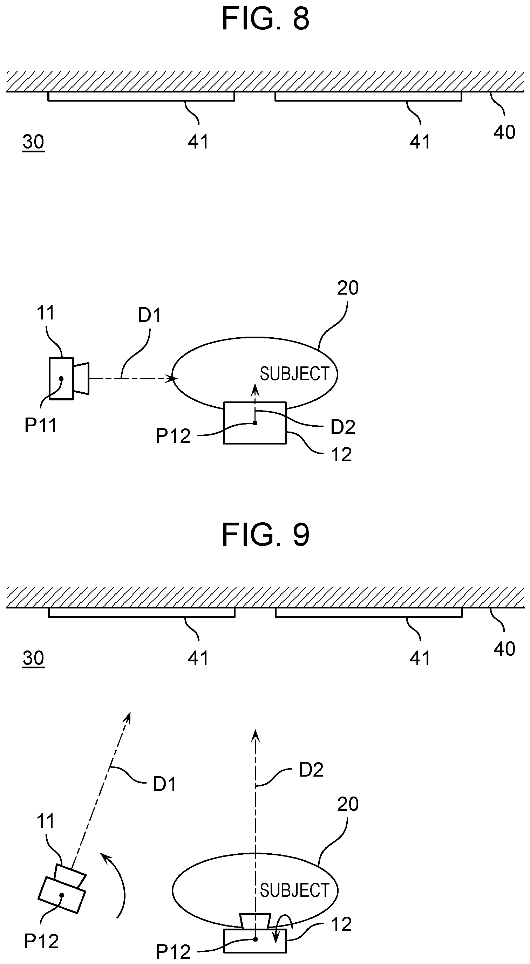

In Modification 4, an initial value of imaging setting of first camera 11 or second camera 12 may be set to image a predetermined direction. Fig. 8 is a diagram for describing imaging directions of the first camera and the second camera at the time of normal imaging according to Modification 4. Fig. 9 is a diagram for describing imaging directions of the first camera and the second camera when the first image and the second image are imaged for position estimation according to Modification 4.

Figs. 8 and 9 are diagrams of a relationship among first camera 11, second camera 12, and subject 20 in space 30 having ceiling 40 as viewed from a horizontal direction.

At the time of normal imaging, since first camera 11 and second camera 12 image subject 20, imaging directions D1 and D2 of first camera 11 and second camera 12 are directions from cameras 11 and 12 toward subject 20.

At the time of position estimation, a direction in which ceiling 40 of a building is present may be set as an initial value of an imaging direction such that first camera 11 and second camera 12 image ceiling 40 of the building in common. The direction in which ceiling 40 is present is an upper direction in a vertical direction. When first camera 11 and second camera 12 are arranged at first position P11 and second position P12, which rotation angle the upper direction is may be set. As a result, first camera 11 and second camera 12 can easily specify the upper direction. In addition, first camera 11 and second camera 12 may include an acceleration sensor, and may specify the upper direction based on a direction of a gravitational acceleration detected by the acceleration sensor.

As described above, in first camera 11 and second camera 12, since the imaging direction set as the initial value at the time of position estimation is the upper direction, the N first images acquired from first camera 11 include images obtained by first camera 11 imaging a direction of ceiling 40. In addition, the M second images acquired from second camera 12 include images obtained by second camera 12 imaging the direction of ceiling 40.

A structure 41 such as a lighting facility or an air conditioning facility is often arranged on ceiling 40. Thus, first camera 11 and second camera 12 can image structure 41 as a common subject by imaging the structure toward the ceiling. As a result, for example, an image pair of a first image and a second image obtained by imaging the direction in which ceiling 40 is present as a predetermined direction can be preferentially processed, and there is a possibility that an image pair having more pairs of matching feature points can be determined as the first image pair at an early stage of the processing. As a result, it is possible to increase a possibility that the first image pair can be determined without performing processing on all the M × N sets of image pairs, and it is possible to reduce a processing load.

Note that the predetermined direction is not limited to the direction in which ceiling 40 is present, and may be a direction in which a floor surface is present or a direction in which a specific wall surface is present. The specific wall surface is, for example, a wall surface positioned on an opposite side of subject 20 with first camera 11 and the second camera interposed therebetween, among wall surfaces of the space.

As described above, at the time of position estimation, first camera 11 and second camera 12 may perform imaging in a direction in which subject 20 is not present so as not to image subject 20. At the time of position estimation, first camera 11 and second camera 12 may generate the first image and the second image used for position estimation by performing imaging in an imaging direction different from that at the time of imaging (that is, at the time of normal imaging) subject 20. In the case of Modification 4, for example, since the direction in which ceiling 40 is present is imaged, the first image and the second image used for position estimation do not include the image of subject 20.

### [4-5. Modification 5]

Modification 5 will describe a case where input receiving unit 106 receives a positional relation among subject 20, first camera 11, and second camera 12.

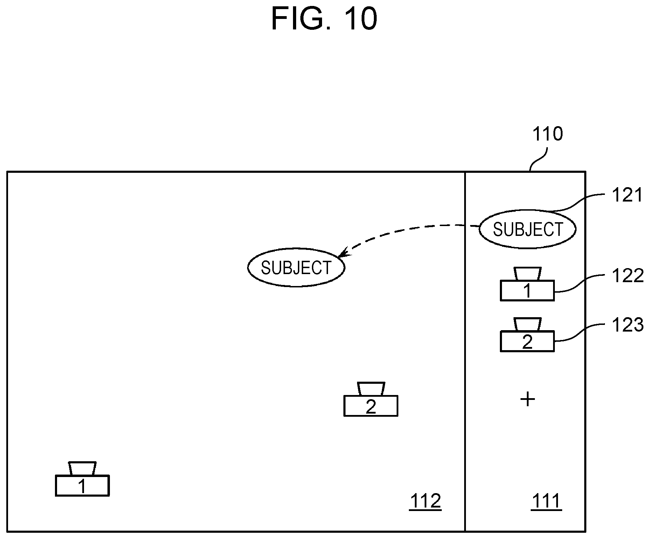

Fig. 10 is a diagram illustrating an example of a user interface (UI) that receives the positional relation among the subject, the first camera, and the second camera according to Modification 5.

In region 111 of UI 110, icon 121 indicating the subject, icon 122 indicating first camera 11, and icon 123 indicating second camera 12 are displayed. Icons 121, 122, and 123 displayed in region 111 are candidates for the subject or the camera arranged in space 30. Region 112 of UI 110 illustrates a plan view of space 30 as viewed from above. Note that UI 110 may be displayed on a display unit (display) (not illustrated) included in control device 100, or may be displayed on an external terminal (not illustrated) to be connected to communicate with control device 100. The external terminal may be a personal computer (PC), a smartphone, or a tablet terminal.

The user performs an input on UI 110 to arrange icons 121 to 123 in region 112, and thus, a positional relation among subject 20, first camera 11, and second camera 12 arranged in actual space 30 is input. The user may be able to input the positional relation among subject 20, first camera 11, and second camera 12 to region 112 of UI 110, and a distance therebetween may not be input. Here, the positional relation is a relative positional relation among subject 20, first camera 11, and second camera 12, and is, for example, information for specifying a direction in which first camera 11 and second camera 12 are present for subject 20. That is, the positional relation is also information for specifying a direction in which subject 20 and second camera 12 are present for first camera 11 or a direction in which subject 20 and first camera 11 are present for second camera 12. As described above, UI 110 receives an input indicating a positional relation among first position P11 of first camera 11, second position P12 of second camera 12, and a third position of subject 20 in specific imaging range 31.

The positional relation is acquired, and thus, control device 100 can easily set an angle formed by imaging direction D1 of first camera 11 and imaging direction D2 of second camera 12 to be less than or equal to a predetermined angle. For example, control device 100 may incline imaging direction D1 such that imaging direction D1 has a direction component from first camera 11 to second position P12 after orienting imaging directions D1 and D2 in a direction in which the ceiling is present. In addition, for example, control device 100 may incline imaging direction D2 such that imaging direction D2 has a direction component from second camera 12 to first position P11.

As a result, the N first images include images obtained by first camera 11 imaging a direction having a direction component toward second position P12. In addition, the M second images include an image obtained by second camera 12 imaging a direction having a direction component toward first position P11.

Thus, the image pair of the first image and the second image obtained by imaging the direction in which there is a high possibility that the common subject is imaged can be preferentially processed, and there is a possibility that the image pair having more pairs of matching feature points can be determined as the first image pair at an early stage of the processing.

### [4-6. Modification 6]

In Modification 6, determination unit 103 may determine the first image pair from one or more image pairs in which an intersection of imaging direction D1 (first imaging direction) in which the first image is imaged and imaging direction D2 (second imaging direction) in which the second image is imaged is included in a range excluding specific imaging range 31 among the N × M sets of image pairs.

Accordingly, one or more image pairs for which the first image pair is to be determined can be narrowed down to one or more image pairs in which the intersection of the first imaging direction and the second imaging direction is included in the range excluding the specific imaging range. In one or more image pairs in which the intersection of the first imaging direction and the second imaging direction is included in the range excluding the specific imaging range, there is a high possibility that the angle formed by the first imaging direction and the second imaging direction is smaller. Accordingly, an area of a subject included in common in one first image and one second image can be increased, and the image pair having more pairs of matching feature points can be determined with less processing load.

### (Other exemplary embodiments)

Although the position estimation method, the position estimation device, and the like according to the exemplary embodiment of the present disclosure have been described above, the present disclosure is not limited to this exemplary embodiment.

In the above exemplary embodiment and modifications, control device 100 has been described as a device separate from the plurality of cameras 11 to 13, but may be provided in at least one of the plurality of cameras 11 to 13.

In the above exemplary embodiment and modifications, all of the plurality of cameras 11 to 13 are cameras capable of changing the imaging direction. However, at least one of the plurality of cameras may be a camera capable of changing the imaging direction, and the other cameras may be cameras incapable of changing the imaging direction.

The positions of the plurality of cameras 11 to 13 in the above exemplary embodiment and modifications may not be fixed, and may be movable. Even in this case, at the time of position estimation, a position of a moving destination can be estimated by using the N first images and the M second images obtained by performing imaging without moving at the position of the moving destination.

In addition, each processing unit included in the control device and the like according to the above-described exemplary embodiment is typically implemented as an LSI which is an integrated circuit. These processing units may be individually integrated into one chip, or some or all of the processing units may be integrated into one chip.

In addition, the circuit integration is not limited to the LSI, and may be implemented by a dedicated circuit or a general-purpose processor. The circuit integration may be implemented using a field programmable gate array (FPGA) that can be programmed after manufacturing of an LSI or a reconfigurable processor in which connections and settings of circuit cells inside an LSI can be reconfigured.

In addition, the present disclosure may be implemented as a position estimation method or the like executed by a control device or the like.

In addition, the division of the functional blocks in the block diagram is an example, and a plurality of functional blocks may be implemented as one functional block, one functional block may be divided into a plurality of functional blocks, or some functions may be transferred to another functional block. In addition, functions of a plurality of functional blocks having similar functions may be processed in parallel or in a time division manner by single hardware or software.

In addition, the order in which the steps in each flowchart are executed is for specifically describing the present disclosure, and may be an order other than the above. In addition, some of the steps above may be performed simultaneously (in parallel) with another step.

Although the imaging system, the control device, and the like according to one or more aspects have been described above based on the exemplary embodiment, the present disclosure is not limited to the exemplary embodiment. Configurations in which various modifications conceivable by those skilled in the art are applied to the present exemplary embodiment and configurations constructed by combining components in different exemplary embodiments may also be included in the scope of one or more aspects without departing from the gist of the present disclosure.

### INDUSTRIAL APPLICABILITY

The present disclosure is useful as a position estimation method or the like capable of accurately estimating positions of a plurality of cameras.

### REFERENCE MARKS IN THE DRAWINGS

- 1: imaging system
- 11: first camera
- 12: second camera
- 13: third camera
- 20: subject
- 30: space
- 31: specific imaging range
- 100: control device
- 101: acquisition unit
- 102: comparison unit
- 103: determination unit
- 104: estimation unit
- 105: controller
- 106: input receiving unit
- 110: UI
- 111, 112: region
- 121, 122, 123: icon
- CP1, CP2: intersection
- D1, D2, D3: imaging direction
- P11: first position
- P12: second position
- P13: third position

## Claims

1. A position estimation method comprising:
acquiring N first images imaged by a first camera arranged at a first position, where N is an integer of 1 or more;
acquiring M second images imaged by a second camera configured to change an imaging direction by rotating at a second position different from the first position, where M is an integer of 1 or more;
comparing the N first images to the M second images by using feature points included in the N first images and the M second images;
determining a first image pair including one first image and one second image among N × M sets of image pairs based on a total number of one or more pairs of feature points matching each other and obtained as a result of the comparing; and
estimating the first position and the second position based on the one or more pairs of feature points between the first image pair.

2. The position estimation method according to Claim 1, wherein
the first camera and the second camera image a specific imaging range when a subject is imaged, and
an image of the subject is not included in the one first image and the one second image.

3. The position estimation method according to Claim 1, wherein
the first camera and the second camera image a specific imaging range when a subject is imaged, and
an intersection of a first imaging direction in which the one first image is imaged and a second imaging direction in which the one second image is imaged is included in a range excluding the specific imaging range.

4. The position estimation method according to Claim 1, wherein
the first camera and the second camera image a specific imaging range when a subject is imaged,
the M second images include two or more second images obtained by imaging in a plurality of imaging directions different from each other, and
in the determining, the first image pair is determined from among one or more image pairs in which an intersection of a first imaging direction in which a first image is imaged and a second imaging direction in which a second image is imaged is included in a range excluding the specific imaging range, among the N × M sets of image pairs.

5. The position estimation method according to any one of Claims 1 to 4, wherein
the M second images include two or more second images obtained by imaging in a plurality of imaging directions different from each other, and
a total number of one or more pairs of feature points between the first image pair is more than a total number of one or more pairs of feature points between one or more second image pairs excluding the first image pair, among the N × M sets of image pairs.

6. The position estimation method according to any one of Claims 1 to 4, wherein
the M second images include two or more second images obtained by imaging in a plurality of imaging directions different from each other,
the comparing is performed for each of the N × M sets of image pairs, and
in the determining, total numbers of one or more pairs of feature points obtained in the N × M sets of image pairs are compared, and an image pair having a largest total number is determined as the first image pair.

7. The position estimation method according to any one of Claims 1 to 4, wherein a total number of one or more pairs of feature points between the first image pair is more than a threshold.

8. The position estimation method according to Claim 7, wherein
the comparison is performed sequentially for the N × M sets of image pairs, and
in the determining, an image pair having a number of pairs of feature points more than the threshold is determined as the first image pair.

9. The position estimation method according to claim 7, wherein
the first camera is configured to change the imaging direction by rotating at the first position,
the N first images include two or more first images obtained by imaging in a plurality of imaging directions different from each other, and include an image obtained by imaging a predetermined direction by the first camera, and
the M second images include two or more second images obtained by imaging in a plurality of imaging directions different from each other, and include an image obtained by imaging the predetermined direction by the second camera.

10. The position estimation method according to Claim 9, wherein the first camera and the second camera are arranged in a building, and
the predetermined direction is a direction in which a ceiling of the building is present.

11. The position estimation method according to any one of Claims 2 to 4, wherein
an input indicating a positional relation among the first position, the second position, and a third position within the specific imaging range is received,
the N first images include an image obtained by imaging a direction in which the first camera has a direction component for the second position, and
the M second images include an image obtained by imaging a direction in which the second camera has a direction component for the first position.

12. A position estimation device comprising:
an acquisition unit that acquires N first images imaged by a first camera arranged at a first position and M second images imaged by a second camera configured to change an imaging direction by rotating at a second position different from the first position, where N is an integer of 1 or more and M is an integer of 1 or more;
a comparison unit that compares the N first images to the M second images by using feature points included in the N first images and the M second images;
a determination unit that determines a first image pair including one first image and one second image among N × M sets of image pairs based on a total number of one or more pairs of feature points matching each other and obtained as a result of the comparing; and
an estimation unit that estimates the first position and the second position based on the one or more pairs of feature points between the first image pair.

13. A program for causing a computer to execute the position estimation method according to any one of Claims 1 to 4.
